# EUROPÄISCHE PATENTSCHRIFT

(11) **EP 2 274 582 B1**
(45) Veröffentlichungstag und Bekanntmachung des Hinweises auf die Patenterteilung: **09.06.2021**
(21) Anmeldenummer: 09741982.4
(22) Anmeldetag: 23.04.2009
(51) Int. Cl.: G01F 1/84, G01F 15/00, G01F 15/06, G01F 25/00

(54) **MESSGERÄT SOWIE VERFAHREN ZUM ÜBERWACHEN EINES MESSGERÄTS**
MEASURING APPARATUS AND METHOD FOR MONITORING A MEASURING APPARATUS
APPAREIL DE MESURE ET PROCÉDÉ DE CONTRÔLE D'UN APPAREIL DE MESURE

(30) Priorität: 06.05.2008 DE 102008022373
(43) Veröffentlichungstag der Anmeldung: 19.01.2011
(73) Patentinhaber: Endress+Hauser Flowtec AG, 4153 Reinach (CH)
(72) Erfinder: ENGSTLER, Gernot, CH-4125 Riehen (CH); KOUDAL, Ole, CH-5400 Baden (CH); MATT, Christian, CH-4147 Aesch (CH); POHL, Hans, 79379 Müllheim (DE)
(74) Vertreter: Andres, Angelika Maria
(86) Internationale Anmeldenummer: PCT/EP2009/054870
(87) Internationale Veröffentlichungsnummer: WO 2009/135764

(56) Entgegenhaltungen:
- EP-A1- 1 464 923
- GB-A- 2 081 452

## Beschreibung

Die Erfindung betrifft ein, insb. als Meß- und/oder Schaltgerät der industriellen Meß- und Automatisierungstechnik ausgebildetes und/oder elektronisches, Meßgerät zum Messen und/oder Überwachen wenigstens einer Meßgröße eines in einer Rohrleitung und/oder einem Behälter geführten Mediums. Darüberhinaus betrifft die Erfindung ein Verfahren zum Überwachen eines solchen Meßgeräts, das einen zumindest teilweise in einem, insb. geerdeten, Gehäuse untergebrachten Meßwandler sowie eine mit dem Meßwandler zumindest zeitweise verbundene Meßgerät-Elektronik aufweist.

In der industriellen Prozeß-Meßtechnik werden, insb. auch im Zusammenhang mit der Automation chemischer oder verfahrenstechnischer Prozesse und/oder der automatisierten Steuerung von industriellen Anlagen, prozeßnah installierte elektrische Meß- und/oder Schaltgerät, so genannte Feldgeräte, wie z.B. Coriolis-Massendurchfluß-Meßgeräte, Dichte-Meßgeräte, magnetisch-induktive Durchflußmeßgeräte, Wirbel-Durchflußmeßgeräte, Ultraschall-Durchflußmeßgeräte, thermische Massendurchfluß-Meßgeräte, Druck-Meßgeräte, Füllstand-Meßgeräte, Temperatur-Meßgeräte, ph-Wert-Meßgeräte etc., eingesetzt, die der Erzeugung von Prozeßgrößen - analog oder digital - repräsentierenden Meßwerten sowie diese letztlich tragende Meßwertsignalen dienen. Bei den jeweils zu erfassenden Prozeßgrößen kann es sich je nach Anwendung beispielsweise, um einen Massendurchfluß, eine Dichte, eine Viskosität, einen Füll- oder einen Grenzstand, einen Druck oder eine Temperatur oder dergleichen, eines flüssigen, pulver-, dampf- oder gasförmigen Mediums handeln, das in einem entsprechenden Behälter, wie z.B. einer Rohrleitung oder einem Tank, geführt bzw. vorgehalten wird.

Zum Erfassen der jeweiligen Prozeßgrößen weisen Feldgeräte der vorgenannten Art jeweils einen entsprechenden physikalisch-elektrischen oder chemisch-elektrischen Meßaufnehmer auf. Dieser ist zumeist in eine Wandung des das Medium jeweils führenden Behälters oder der in den Verlauf einer das Medium jeweils führenden Leitung, beispielsweise eine Rohrleitung, eingesetzt und dient dazu, wenigstens ein mit der zu erfassenden Prozeßgröße entsprechend korrespondierendes elektrisches Meßsignal zu erzeugen. Zum Verarbeiten des Meßsignals ist der Meßaufnehmer weiters mit einer in einer Feldgerät-Elektronik des Feldgeräts vorgesehenen, der Weiterverarbeitung oder Auswertung des wenigstens einen Meßsignals wie auch der Generierung entsprechender Meßwertesignale dienenden Meßgerät internen Betriebs- und Auswerteschaltung verbunden. Weiterführende Beispiele für derartige, dem Fachmann an und für sich bekannte Meßgeräte, insb. auch deren Aufbau, Verwendung und/oder Betrieb betreffende Einzelheiten, sind u.a. in der WO-A 07/130024, WO-A 03/048874, WO-A 02/45045, der WO-A 02/103327, der WO-A 02/086426, der WO-A 01/02816, der WO-A 00/48157, der WO-A 00/36 379, der WO-A 00/14 485, der WO-A 95/16 897, der WO-A 88/02 853, der WO-A 88/02 476, der US-B 71 34 348, der US-B 71 33 727, der US-B 70 75 313, der US-B 70 73 396, der US-B 70 32 045, der US-B 68 54 055, der US-B 67 99 476, der US-B 67 76 053, der US-B 67 69 301, der US-B 67 11 958, der US-B 66 66 098, der US-B 66 62 120, der US-B 66 40 308, US-B 65 77 989, der US-B 65 74 515, der US-B 65 56 447, der US-B 65 39 819, der US-B 65 35 161, der US-B 65 12 358, der US-B 64 87 507, der US-B 64 84 591, der US-B 64 80 131, der US-B 64 76 522, der US-B 63 97 683, der US-B 63 66 436, der US-B 63 52 000, der US-B 63 11 136, der US-B 62 85 094, der US-B 62 69 701, der US-B 62 36 322, der US-A 61 40 940, der US-A 60 51 783, der US-A 60 14 100, der US-A 60 06 609, der US-A 59 59 372, der US-A 57 96 011, der US-A 57 42 225, der US-A 57 42 225, der US-A 57 06 007, der US-A 56 87 100, der US-A 56 72 975, der US-A 56 04 685, der US-A 55 35 243, der US-A 54 69 748, der US-A 54 16 723, der US-A 53 63 341, der US-A 53 59 881, der US-A 53 49 872, der US-A 52 31 884, der US-A 52 07 101, der US-A 51 31 279, der US-A 50 68 592, der US-A 50 65 152, der US-A 50 52 230, der US-A 49 26 340, der US-A 48 50 213, der US-A 47 68 384, der US-A 47 16 770, der US-A 46 56 353, der US-A 46 17 607, der US-A 45 94 584, der US-A 45 74 328, der US-A 45 24 610, der US-A 44 68 971, der US-A 43 17 116, der US-A 43 08 754, der US-A 38 78 725, der US-A 2007/0217091, der US-A 2006/0179956, der US-A 2006/0161359, der US-A 2006/0120054, der US-A 2006/0112774, der US-A 2006/0096390, der US-A 2005/0139015, der US-A 2004/0117675, der EP-A 1 669 726, der EP-A 1 158 289, der EP-A 1 147 463, der EP-A 1 058 093, der EP-A 984 248, der EP-A 591 926, der EP-A 525 920, der DE-A 102005 032 808, der DE 100 41 166, der DE-A 44 12 388, der DE-A 39 34 007 oder der DE-A 37 11 754 hinreichend ausführlich und detailliert beschrieben.

Bei einer Vielzahl von Feldgeräten der in Rede stehenden Art wird der Meßaufnehmer zum Erzeugen des Meßsignals im Betrieb zudem von einem von der Betriebs- und Auswerteschaltung zumindest zeitweise generierten Treibersignal so angesteuert, daß er in einer für die Messung geeigneten Weise zumindest mittelbar oder aber auch über eine das Medium direkt kontaktierende Sonde praktisch unmittelbar auf das Medium einwirkt, um dort mit der zu erfassenden Meßgröße entsprechend korrespondierende Reaktionen hervorzurufen. Das Treibersignal kann dabei beispielsweise hinsichtlich einer Stromstärke, einer Spannungshöhe und/oder einer Frequenz entsprechend geregelt sein. Als Beispiele für solche aktiven, also ein elektrisches Treibersignal im Medium entsprechend umsetzende Meßaufnehmer sind im besonderen dem Messen von zumindest zeitweise strömenden Medien dienende Durchfluß-Meßaufnehmer, z.B. mit wenigstens einer vom Treibersignal angesteuerten, Magnetfeld erzeugenden Spule oder wenigstens einem vom Treibersignal angesteuerten Ultraschallsender, oder aber auch dem Messen und/oder Überwachen von Füllständen in einem Behälter dienende Füllstands- und/oder Grenzstandsaufnehmer, wie z.B. mit freistrahlender Mikrowellenantenne, Gouboun-Leitung oder vibrierendem Tauchkörper, zu nennen.

Geräte der in Rede stehenden Art weisen ferner wenigstens ein Gehäuse mit wenigstens einer elektrische, elektronische und/oder elektro-mechanische Bauteile und/oder Baugruppen des Geräts, beispielsweise Komponenten der erwähnten Betriebs- und Auswerteschaltung, aufnehmende, üblicherweise druckdicht und/oder explosionsfest verschlossene Kammer auf. So umfassen Feldgeräte der beschriebenen Art zur Aufnahme der Feldgerät-Elektronik zumeist ein vergleichsweise robustes, insb. schlag-, druck-, und/oder wetterfestes, Elektronik-Gehäuse. Dieses kann, wie z.B. in der US-A 63 97 683 oder der WO-A 00/36379 vorgeschlagen, vom Feldgerät entfernt angeordnet und mit diesem nur über eine flexible Leitung verbunden sein; es kann aber auch, wie z.B. in der EP-A 903 651 oder der EP-A 1 008 836 gezeigt, direkt am Meßaufnehmer oder einem den Meßaufnehmer separat einhausenden Meßaufnehmer-Gehäuse angeordnet sein. Gegebenenfalls kann dann das Elektronik-Gehäuse, wie beispielsweise in der EP-A 984 248, der US-A 45 94 584, der US-A 47 16 770 oder der US-A 63 52 000 gezeigt, auch dazu dienen, einige mechanische Komponenten des Meßaufnehmers mit aufzunehmen, wie z.B. sich unter mechanischer Einwirkung betriebsmäßig verformende membran-, stab-, hülsen- oder rohrförmige Deformation- oder Vibrationskörper, vgl. hierzu auch die eingangs erwähnte US-B 63 52 000 oder US-A 60 51 783.

Bei Feldgeräten ist die jeweilige Feldgerät-Elektronik üblicherweise über entsprechende elektrische Leitungen an ein vom jeweiligen Gerät zumeist räumlich entfernt angeordnetes und zumeist auch räumlich verteiltes übergeordneten elektronischen Datenverarbeitungssystem elektrisch angeschlossen, an das die vom jeweiligen Feldgerät erzeugten Meßwerte mittels eines diese entsprechend tragenden Meßwertesignals zeitnah weitergegeben werden.

Elektrische Geräte der beschriebenen Art sind zudem üblicherweise mittels eines innerhalb des übergeordneten Datenverarbeitungssystems vorgesehenen Datenübertragungsnetzwerks miteinander und/oder mit entsprechenden elektronischen Prozeß-Steuerungen verbunden, beispielsweise vor Ort installierte Speicherprogrammierbare Steuerungen oder in einer entfernten Leitwarte installierte Prozeß-Leitrechnern, wohin die mittels des elektronischen Geräts erzeugten und in geeigneterweise digitalisierten und entsprechend codierten Meßwerte weitergesendet werden. Mittels solcher Prozeß-Leitrechner können die übertragenen Meßwerte weiterverarbeitet und als entsprechende Meßergebnisse z.B. auf Monitoren visualisiert und/oder in Steuersignale für andere als Stellgeräte ausgebildete Feldgeräte, wie z.B. Magnet-Ventile, Elektro-Motoren etc., umgewandelt werden. Da moderne Meßanordnungen zumeist auch direkt von solchen Leitrechnern aus überwacht und gegebenenfalls gesteuert und/oder konfiguriert werden können, werden in entsprechender Weise über vorgenannte, zumeist hinsichtlich der Übertragungsphysik und/oder der Übertragungslogik hybride Datenübertragungsnetzwerke dem elektronischen Gerät zugewiesene Betriebsdaten gleichermaßen versendet. Dementsprechend dient das Datenverarbeitungssystem im Falle dessen, daß das elektronische Gerät als Feldgerät der vorgenannten Art, insb. auch als Meßgerät, ausgebildet ist, üblicherweise auch dazu, das vom elektronischen Gerät gelieferte Meßwertesignal entsprechend den Anforderungen nachgelagerter Datenübertragungsnetzwerke zu konditionieren, beispielsweise geeignet zu digitalisieren und gegebenenfalls in ein entsprechendes Telegramm umzusetzen, und/oder vor Ort auszuwerten. Dafür sind in solchen Datenverarbeitungssystemen mit den jeweiligen Verbindungsleitungen elektrisch gekoppelte Auswerteschaltungen vorgesehen, die die vom jeweiligen Meß- und/oder Schaltgerät empfangenen Meßwerte vor- und/oder weiterverarbeiten sowie, falls erforderliche, geeignet konvertieren. Zur Datenübertragung dienen in solchen industriellen Datenverarbeitungssystemen zumindest abschnittsweise, insb. serielle, Feldbusse, wie z.B. FOUNDATION FIELDBUS, RACKBUS-RS 485, PROFIBUS etc., oder beispielsweise auch Netzwerke auf Basis des ETHERNET-Standards sowie die entsprechenden, zumeist übergreifend standardisierten Übertragungs-Protokolle. Neben den für die Verarbeitung und Konvertierung der von den jeweils angeschlossenen Feldgeräte gelieferten Meßwerte erforderlichen Auswerteschaltungen weisen solche übergeordnete Datenverarbeitungssysteme zumeist auch der Versorgung der angeschlossenen Meß- und/oder Schaltgräte mit elektrischer Energie dienende elektrische Versorgungsschaltungen auf, die eine entsprechende, ggf. direkt vom angeschlossenen Feldbus gespeiste, Versorgungsspannung für die jeweilige Feldgerät-Elektronik bereitstellen und die daran angeschlossenen elektrische Leitungen sowie die jeweiligen Feldgerät-Elektroniken durchfließende elektrische Ströme treiben. Eine Versorgungsschaltung kann dabei beispielsweise genau einem Feldgerät jeweils zugeordnet und zusammen mit der dem jeweiligen Feldgerät zugeordneten Auswerteschaltung - beispielsweise zu einem entsprechenden Feldbusadapter vereint - in einem gemeinsamen, z.B. als Hutschienen-Modul ausgebildeten, Elektronik-Gehäuse untergebracht sein. Es ist aber durchaus auch üblich, Versorgungsschaltungen und Auswerteschaltungen jeweils in separaten, ggf. voneinander räumlich entfernten Elektronik-Gehäusen unterzubringen und über externe Leitungen miteinander entsprechend zu verdrahten.

Industrietaugliche elektrische bzw. auch elektronische Geräte, insb. Feldgeräte der genannten Art, müssen bekanntlich sehr hohen Schutzanforderungen genügen, insb. hinsichtlich der Abschottung der darin plazierten elektrischen Bauteile gegen äußere Umwelteinflüsse, hinsichtlich des Schutzes gegen allfälliges Berühren spannungsführender Bauteile und/oder hinsichtlich des Unterbindens von elektrischen Zündfunken im Fehlerfall. Hierzu gehört, wie beispielsweise auch in der DE-A 100 41 166 ausgeführt, im besonderen die Anforderung, daß ein elektrischer Leckstrom, der, beispielsweise bei Körper- oder Nebenschluß infolge schadhafter Leitungsisolierung oder infolge leitfähiger Beläge, via Gehäuse gen Masse oder Erde fließen könnte, einen maximal zulässigen Höchstwert nicht überschreiten darf. Bei einem Anschluß des elektrischen Geräts an 250 V beträgt dieser zulässige Höchstwert beispielsweise 10 mA. Werden diese Anforderungen erfüllt, so entspricht das Gerät zumindest den Anforderungen der Schutzklasse 11, d. h. es handelt sich um ein elektrisches Gerät mit Schutzisolierung. Zur Realisierung dieser Anforderungen ist es demnach erforderlich, daß das Gehäuse des elektrischen Geräts gegenüber allen spannungsführenden Teilen des Geräts ausreichend isoliert ist. Eine solche Isolierung ist insbesondere dann notwendig, wenn es sich um ein Gehäuse aus elektrisch leitfähigem Material, beispielsweise einem Metall, handelt. Typischerweise sind die Isolationswiderstände zwischen Gehäuse und Meßgerät-Elektronik zumindest anfänglich wesentlich größer als 1MΩ, etwa in der Größenordnung von 10 MΩ oder darüber, während solche Leckströme ermöglichende elektrisch leitende Verbindungen zwischen Gehäuse und Meßgerät-Elektronik einen elektrischen Widerstand aufweisen können, der um mehr als eine Dekade kleiner als der anfängliche Isolationswiderstand, insb. kleiner als 1 MΩ oder sogar kleiner als 500 kΩ, sein kann.

Elektrische Geräte, die auch in explosionsgefährdeten Bereichen betrieben werden sollen, müssen darüberhinaus auch sehr hohen Sicherheitsanforderungen hinsichtlich des Explosionsschutzes genügen. Dabei geht es im besonderen darum, die Bildung von Funken sicher zu vermeiden oder zumindest sicherzustellen, daß ein im Inneren eines abgeschlossenen Raumes allfällig entstehender Funke keine Auswirkungen auf die Umgebung hat, um so die eine potentiell mögliche Auslösung einer Explosion sicher zu verhindern. Wie beispielsweise auch in der eingangs genannten EP-A 1 669 726, US-B 63 66 436, der US-B 65 56 447 oder der US-A 2007/0217091 hierzu ausgeführt, werden im Zusammenhang mit Explosionsschutz verschiedene Zündschutzarten unterschieden, die jeweils auch in einschlägigen, elektrische Betriebsmittel für explosionsgefährdete Bereiche betreffenden Standards und Normen entsprechend manifestiert sind, wie z.B. in der US-amerikanischen Norm FM3600, der internationale Norm IEC 60079-18 oder den Normen DIN EN 50014 ff. So ist z.B. gemäß der Europäischen Norm EN 50 020:1994 Explosionsschutz gegeben, wenn Geräte gemäß der darin definierten Zündschutzart oder auch Schutzklasse mit dem Namen "Eigensicherheit" (Ex-i) ausgebildet sind. Gemäß dieser Schutzklasse haben die Werte für die elektrischen Größen Strom, Spannung und Leistung in einem Gerät zu jeder Zeit jeweils unterhalb eines vorgegebenen Grenzwertes zu liegen. Die drei Grenzwerte sind so gewählt, daß im Fehlerfall, z.B. durch einen Kurzschluß, die maximal entstehende Wärme nicht ausreicht, um einen Zündfunken zu erzeugen. Der Strom wird z.B. durch Widerstände, die Spannung z.B. durch Zener-Dioden und die Leistung durch entsprechende Kombination von strom- und spannungsbegrenzenden Bauteilen unter den vorgegebenen Grenzwerten gehalten. In der Europäischen Norm EN 50 019:1994 ist eine weitere Schutzklasse mit dem Namen "Erhöhte Sicherheit" (Ex-e) angegeben. Bei Geräten, die gemäß dieser Schutzklasse ausgebildet sind, wird der Zünd- bzw. Explosionsschutz dadurch erzielt, daß die räumlichen Abstände zwischen zwei verschiedenen elektrischen Potentialen so groß sind, daß eine Funkenbildung auch im Fehlerfall aufgrund der Distanz nicht auftreten kann. Dies kann jedoch unter Umständen dazu führen, daß Schaltungsanordnungen sehr große Abmessungen aufweisen müssen, um diesen Anforderungen zu genügen. Als eine andere Schutzklasse ist in der Europäischen Norm EN 50 018:1994 ferner die Zündschutzart "Druckfeste Kapselung''' (Ex-d) aufgeführt. Elektrische Geräte die gemäß dieser Schutzklasse ausgebildet sind, müssen ein druckfestes Gehäuse aufweisen, durch das sichergestellt ist, daß eine im Inneren des Gehäuses auftretende Explosion nicht in den Außenraum übertragen werden kann. Druckfeste Gehäuse sind, damit sie eine ausreichende mechanische Festigkeit aufweisen, vergleichsweise dickwandig ausgebildet. In den USA, in Kanada, in Japan und anderen Ländern gibt es mit vorgenannten Europäischen Normen vergleichbare Standards.

Neben vorgenannter Betriebssicherheit im Sinne eines Ausschließens von vom Feldgerät ausgehender Gefährdung von Personen und/oder von Anlagen besteht eine weitere Anforderung an derartige, als Feldgeräte ausgebildeten elektronischen Geräten darin, Betriebssicherheit auch im Sinne einer Verläßlichkeit der intern generierten Meßsignale bzw. der davon abgeleiteten Meßwerte dauerhaft zu gewährleisten. So können beispielsweise infolge von fortschreitender Belagsbildung und/oder infolge schadhafter Isolation innerhalb der Meßgerät-Elektronik unerwünschterweise gebildete leitfähige Verbindungen und damit einhergehend im Feldgerät fließenden Leckströmen zu erheblichen Verfälschungen von intern des jeweiligen Feldgerät generierten Meßsignalen führen.

Aus der GB 2 081 452 A ist ein Füllstandssensor bekannt, bei dem vorkommende Fehler und Störungen im Auswertegerät mit Sicherheit erkannt und von den normalen Betriebszuständen unterschieden werden können.

Um den fehlerfreier Betrieb solcher Geräte sowie deren Betriebssicherheit über einen sehr langen Zeitraum gewährleisten oder allfällig auftretende oder sich anbahnende Gerätefehler möglichst frühzeitig erkennen zu können, ist dementsprechend besonders auch die Meßgerät-Elektronik wiederkehrend auf ihre Integrität hin zu überprüfen. Bei konventionellen Feldgeräten der in rede stehenden Art wird die Integrität der zugehörigen Meßgerät-Elektronik oftmals dadurch geprüft, daß eine entsprechende elektronische Meß- und Prüfschaltung, mittels der Leitungs- und Isolationswiderstände ausgemessen werden können, von extern über entsprechenden Service-Anschlüsse an die Meßgerät-Elektronik angeschlossen und eine entsprechende Impedanzmessung an einzelnen Baugruppen und/oder Leitungen der Meßgerät-Elektronik durchgeführt wird, gegebenenfalls einhergehend mit einer vorübergehenden Unterbrechung des eigentlichen Meßbetriebs. Allerdings zieht die Verwendung solcher separater Strommeßschaltungen verbunden mit einer nur durch Service-Personal vor Ort durchführbaren Diagnose einen sehr hohen personellen wie auch logistischen Aufwand mit sich. Als eine weitere besonderer Nachteil solcher separater Meß- und Prüfschaltungen ist zudem die zumeist erforderliche vorübergehende Unterbrechung des eigentlichen Meßbetriebs des Geräts oder ein gegebenenfalls erforderliches Abtrennen der Meßgerät-Elektronik von einem allfällig daran angeschlossenen Kommunikations- und Versorgungsnetzwerk zu nennen.

Eine Aufgabe der Erfindung besteht daher darin, die Überprüfung von Betriebszuständen und/oder die Betriebssicherheit elektrischer Geräte der vorgenannten Art, insb. auch von deren jeweiliger Elektronik, dahingehend zu verbessern, daß ein frühzeitiges Erkennen von sich anbahnenden Fehlerzuständen innerhalb der Meßgerät-Elektronik, wie etwa durch leitfähige Beläge und/oder Isolationsfehler hervorgerufenen Körper- und/oder Nebenschluß, ermöglicht wird, gegebenenfalls auch ohne nennenswerte Einschränkung des eigentlichen Meßbetriebs und/oder auch im Zuge einer vom am Meßgerät wiederkehrend und/oder selbsttätig durchgeführten Diagnose.

Zur Lösung der Aufgabe wird ein Verfahren gemäß Anspruch 1 und eine Vorrichtung gemäß Anspruch 5 vorgeschlagen. Weitere Ausgestaltungen ergeben sich aus den Unteransprüchen.

Ein Grundgedanke der Erfindung besteht darin, die Überprüfung von Betriebszuständen und/oder die Betriebssicherheit elektrischer Geräte der vorgenannten Art, insb. auch von deren jeweiliger Elektronik, mit "bordeigenen" Meßmitteln, wie etwa der vorgenannten Strommeßschaltung und/oder der vorgenannten Quellenschaltung, durchzuführen, insb. auch automatisch oder halbautomatisch im Dialog mit dem Anwender, und zwar möglichst ohne Unterbrechung oder zumindest ohne nennenswerte Einschränkung des eigentlichen Meßbetriebs.

Im einzelnen gibt es nun eine Vielzahl von Möglichkeiten, die vorgenannten Meßgeräte bzw. Verfahren im Sinne der Erfindung weiter auszugestalten oder weiterzubilden. Dazu wird im besonderen auch auf die den unabhängigen Patentansprüchen nachgeordneten Patentansprüche sowie auf die nachfolgende Erläuterung der Erfindung wie auch vorteilhafter Ausgestaltungen derselben anhand von in den Figuren der Zeichnung dargestellten Ausführungsbeispielen verwiesen; gleiche Teile sind in den Figuren im übrigen mit gleichen Bezugszeichen versehen. Falls es der Übersichtlichkeit dienlich ist, wird auf bereits erwähnte Bezugszeichen in nachfolgenden Figuren verzichtet. Im einzelne zeigen:
- Fig. 1: schematisch in einer perspektivischen Seitenansicht ein Meßgerät zum Messen und/oder Überwachen wenigstens einer Meßgröße eines in einer Rohrleitung und/oder einem Behälter geführten Mediums,
- Fig. 2: schematisch eine teilweise geschnittene Seitenansicht eine erste Variante eines, insb. als ein in eine Rohrleitung einfügbares In-Line-Meßgerät zum Messen wenigstens eines Parameters eines in der Rohrleitung geführten Mediums, ausgebildeten Meßgeräts gemäß Fig. 1, und
- Fig. 3: schematisch eine teilweise geschnittene Seitenansicht eine zweite Variante eines, insb. als ein in eine Rohrleitung einfügbares In-Line-Meßgerät zum Messen wenigstens eines Parameters eines in der Rohrleitung geführten Mediums, ausgebildeten Meßgeräts gemäß Fig. 1.

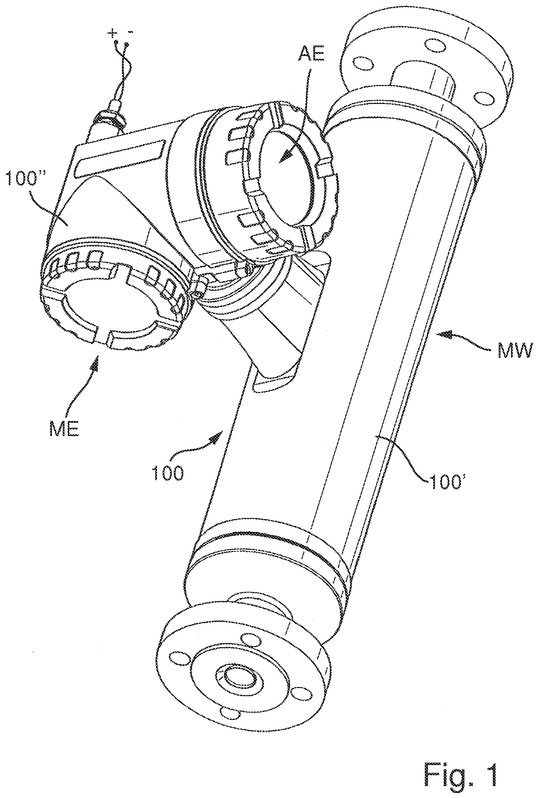

In der Fig. 1 ist ein, insb. als Meß- und/oder Schaltgerät der industriellen Meß- und Automatisierungstechnik ausgebildetes, Meßgerät gezeigt. Das Meßgerät weist wenigstens ein, insb. metallisches und/oder modulares, Gehäuse 100 auf, in dem elektrische, elektronische und/oder elektro-mechanische Bauteile und/oder -gruppen des Meßgeräts untergebracht sind. Das Meßgerät ist im besonderen dafür vorgesehen, zum Messen einer physikalischen und/oder chemischen Meßgröße eines in einer, insb. elektrisch geerdeten, Rohrleitung und/oder in einem, insb. elektrisch geerdeten, Behälter geführten Mediums verwendet zu werden. Dementsprechend kann es sich bei dem Meßerät beispielsweise um ein Coriolis-Massendurchflußmeßgerät, ein Dichte-Meßgerät, ein magnetisch-induktives Durchflußmeßgerät, ein Wirbel-Durchflußmeßgerät, ein Ultarschall-Durchflußmeßgerät, ein thermisches Massendurchfluß-Meßgerät, ein Druck-Meßgerät, ein Füllstand-Meßgerät, ein Temperatur-Meßgerät oder dergleichen handeln.

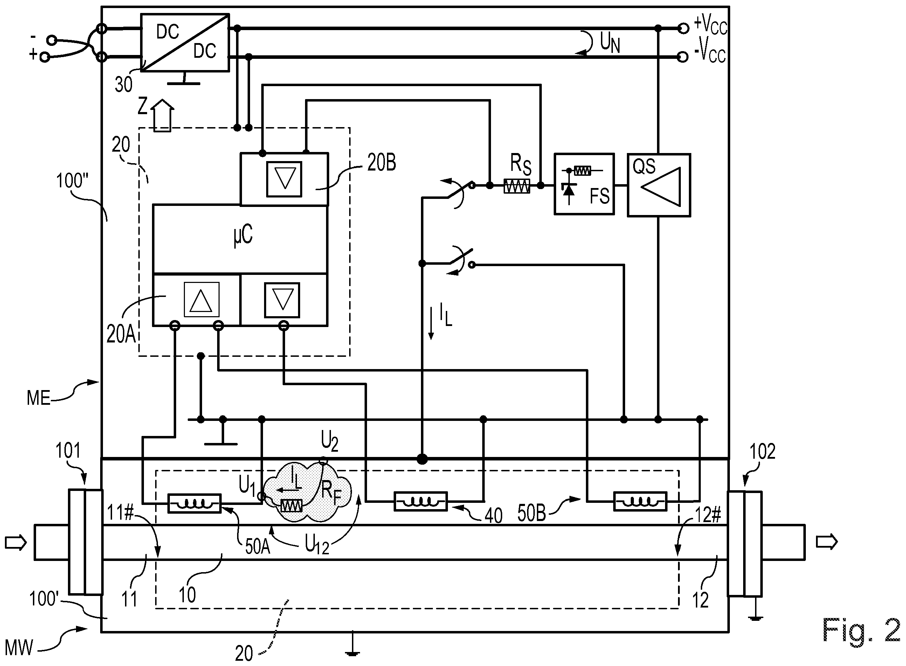

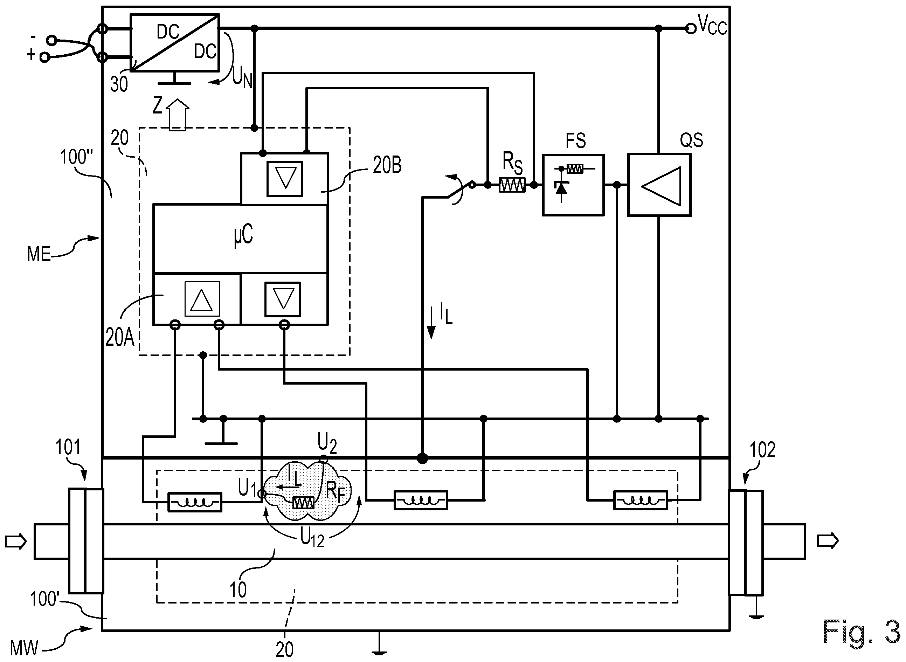

Wie aus der Zusammenschau der Figuren 1, 2 und 3 ersichtlich umfaßt das Meßgerät dafür einen im, insb. geerdeten, Gehäuse 100 - hier in einem separaten Aufnehmer-Modul 100' des Gehäuses - untergebrachten Meßwandler MW zum Erfassen der wenigstens einen Meßgröße. Desweiteren weist das Meßgerät eine innerhalb des Gehäuses - hier zumindest anteilig innerhalb eines separaten Elektronik-Moduls 100" des Gehäuses - angeordnete und mit dem Meßwandler MW zumindest zeitweise elektrisch verbundene Meßgerät-Elektronik ME auf. Diese wiederum umfaßt eine interne Versorgungsschaltung 30, die im Betrieb zumindest eine interne Nutzspannung U_{N} bereitstellt, die - wie in Fig. 2 schematisch dargestellt - bipolar mit U_{N} = +V_{CC}...-V_{CC} und/oder - wie in Fig. 3 schematisch dargestellt - unipolar mit U_{N} = V_{CC}...0 und/oder U_{N} = V_{CC}...GND ausgebildet sein kann. Darüberhinaus umfaßt die Meßgerät-Elektronik 2 eine, insb. mittels eines Mikrocomputers µC gebildete, Auswerte- und Betriebsschaltung 20, die wenigstens einen, beispielsweise auch zumindest anteilig mittels vorgenannter Nutzspannung betriebenen, Meßkanal 20A zum Erfassen und Weiterverarbeiten von wenigstens einem mittels des Meßwandlers MW generierten und von der zu erfassenden Meßgröße abhängigen und insoweit mit dieser korrespondierenden Primärsignal s1, beispielsweise einer Meßspannung oder einem Meßstrom. Zwecks Digitalisierung des wenigstens einen Primärsignals s1 kann der Meßkanal 20A ferner einen entsprechenden A/D-Wandler aufweisen. Zum Visualisieren von Meßgerät intern erzeugten Meßwerten und/oder gegebenenfalls Meßgerät intern generierten Statusmeldungen, wie etwa eine Fehlermeldung oder einen Alarm, vor Ort umfaßt das Meßgerät nach Weiterbildung der Erfindung desweiteren ein zumindest zeitweise mit der Meßgerät-Elektronik kommunizierendes Anzeigeelement AE, wie etwa ein im Gehäuse plaziertes LCD- oder TFT-Display.

Für die weitere Erläuterung der Erfindung ist bei dem in den Figuren 2 und 3 gezeigten Ausführungsbeispielen stellvertretend jeweils ein in der industriellen Meßtechnik etabliertes der In-Line-Meßgerät mit einem Meßwandler vom Vibrationstyp gewählt worden, wie es dem Fachmann z.B. auch aus der eingangs erwähnten WO-A 95/16897, US-B 69 10 366, US-A 60 06 609, US-B 65 05 519, der US-A 53 01 557, US-A 49 57 005, US 2003/0208325, WO-A 99/39164, WO-A 98/07009, WO-A 01/33174, der WO-A 00/57141, der WO-A 88/03261 bekannt ist. Das, beispielsweise als Coriolis-Massendurchflußmeßgerät, Dichtemeßgerät, Viskositätsmeßgerät oder dergleichen ausgebildete, In-Line-Meßgerät ist mittels geeigneter Flanschverbindungen 101, 102 in den Verlauf einer- hier nicht dargestellte - Rohrleitung einfügbar und dient dem Messen und/oder Überwachen wenigstens eines Parameters, beispielsweise einem Massendurchfluß, einer Dichte, einer Viskosität etc., eines in der Rohrleitung strömenden Mediums. Der Meßwandler dient bei dem hier gezeigten Meßgerät dazu, in einem hindurchströmenden Medium mechanische Reaktionskräfte, z.B. massedurchflußabhängige Coriolis-Kräfte, dichteabhängige Trägheitskräfte und/oder viskositätsabhängige Reibungskräfte, zu erzeugen, die sensorisch erfaßbar auf den Meßwandler zurückwirken. Abgeleitet von diesen Reaktionskräften können so in der dem Fachmann bekannten Weise z.B. ein Massedurchfluß m, eine Dichte und/oder eine Viskosität des Mediums gemessen werden.

Zum Führen des Mediums umfaßt Meßwandler wenigstens ein - im hier gezeigten Ausführungsbeispiel im wesentlichen gerades - Meßrohr 10, das im Betrieb vibrieren gelassen und dabei, um eine statische Ruhelage oszillierend, wiederholt elastisch verformt wird. Anstelle eines Meßwandlers mit - wie hier oder beispielsweise auch in den eingangs erwähnten WO-A 03/095950, WO-A 03/095949, WO-A 95/16897, US-A 2005/0139015, US-B 69 10 366, US-B 66 91 583, US-A 60 41 665, US-A 60 06 609, US-A 56 16 868, US-A 52 53 533 gezeigt -einem geraden Meßrohr, könne aber auch Meßwandler mit zueinander parallelen geraden Meßrohren, wie sie beispielsweise in der US-A 52 18 873 oder der US-A 56 02 345 gezeigt sind, verwendet werden oder auch mit zueinander parallelen gebogenen Meßrohren, wie sie u.a. aus der US-B 67 11 958, der US-B 65 05 519, der US-A 57 96 011, der US-A 53 49 872, der US-A 53 01 557, der US-A 48 95 031, der US 2003/0208325, der US-A 44 91 025, der WO-A 99/39164, der WO-A 98/07009, der WO-A 01/33174, der US-A 48 76 898, der WO-A 00/57141, der WO-A 88/03261 oder der US-B 68 95 826 bekannt sind. Ferner ist es auch möglich Meßwandler mit nur einem einzigen gebogenen Meßrohr, wie etwa aus der WO-A 07/130024, der US-A 41 87 721, der US-A 50 69 074, der US-B 64 84 591 oder der US-B 66 66 098 bekannt, oder mit einem helixförmig Meßrohr, wie etwa aus der US-A 49 57 005 bekannt, zu verwenden.

Im Betrieb des Meßwandlers wird das Meßrohr 10 zwecks Erzeugens von - hier als Schwingungsmeßsignale ausgebildeten - Primärsignalen s1, s2 zumindest zeitweise zu, insb. als laterale Biegeschwingungen in einer gedachten Schwingungsebene ausgebildete, Vibrationen in einem Nutzmode, insb. im Bereich einer natürlichen Resonanzfrequenz eines entsprechenden natürlichen Schwingungsmodes, angeregt. Für den Fall, daß das Medium in der Rohrleitung strömt und somit der Massedurchfluß m von Null verschieden ist, werden mittels des vibrierenden Meßrohrs 10 im hindurchströmenden Medium Corioliskräfte induziert. Diese wiederum wirken auf das Meßrohr 10 zurück und bewirken so bekanntlich eine zusätzliche, sensorisch erfaßbare Verformung des Meßrohrs 10 im sogenannten, dem angeregten Nutzmode überlagerten Coriolis-Mode. Die momentane Ausprägung dieser zusätzlichen Verformung des Meßrohrs 10 ist dabei, insb. hinsichtlich ihrer Amplituden, vom momentanen Massedurchfluß m abhängig. Zur Minimierung von auf das Meßrohr 10 wirkenden Störeinflüssen wie auch zur Reduzierung von seitens des Meßwandlers an die angeschlossene Rohrleitung abgegebener Schwingungsenergie ist - wie bei derartigen Meßwandlern mit einem einzigen Meßrohr durchaus üblich - im Meßwandler des weiteren ein - hier im wesentlichen gerader und im wesentlichen parallel zum Meßrohr 10 verlaufender - Gegenschwinger 13 vorgesehen. Dieser ist, wie auch in Fig.1 gezeigt, unter Bildung einer - praktisch ein Einlaßende des Meßrohrs 10 definierenden - ersten Kopplungszone 11# einlaßseitig und der unter Bildung einer - praktisch ein Auslaßende des Meßrohrs 10 definierenden - zweiten Kopplungszone 12# auslaßseitig jeweils am Meßrohr 10 fixiert. Der Gegenschwinger 13 kann rohr - oder kastenförmiger ausgeführt und beispielsweise so am Einlaßende und am Auslaßende mit dem Meßrohr 10 verbunden sein, daß er im wesentlichen koaxial zum Meßrohr 10 ausgerichtet ist und somit das Meßrohr 10 vom Gegenschwinger 13 zumindest teilweise ummantelt ist. Zudem kann es von Vorteil sein, wenn der Gegenschwinger 13 schwerer ausgelegt ist als das Meßrohr 10.

Das Meßrohr 10 ist desweiteren über ein einlaßseitig im Bereich der ersten Kopplungszone einmündendes Einlaßrohrstück 11 und über ein auslaßseitig im Bereich der zweiten Kopplungszone einmündendes, insb. zum Einlaßrohrstück 11 im wesentlichen identisches, Auslaßrohrstück 12 entsprechend an die das Medium zu- bzw. abführende - hier nicht dargestellte - Rohrleitung angeschlossen. Einlaßrohrstück 11 und Auslaßrohrstück 12 sind im gezeigten Ausführungsbeispiel wesentlichen gerade ausgeführt und zueinander, zum Meßrohr 10 sowie zu einer die Kopplungszonen praktisch verbindenden imaginären Längsachse L fluchtend ausgerichtet. In vorteilhafter Weise können Meßrohr 10, Einlaß- und Auslaßrohrstück 11, 12 einstückig ausgeführt sein, so daß zu deren Herstellung z.B. ein einziges rohrförmiges Halbzeug dienen kann. Anstelle dessen, daß Meßrohr 10, Einlaßrohrstück 11 und Auslaßrohrstück 12 jeweils durch Segmente eines einzigen, einstückigen Rohres gebildet sind, können diese, falls erforderlich aber auch mittels einzelner, nachträglich zusammengefügter, z.B. zusammengeschweißter, Halbzeuge hergestellt werden. Zur Herstellung des Meßwandlers 1 kann im übrigen praktisch jedes der dafür üblichen Materialien, wie z.B. Stahl, Titan, Tantal, Zirkonium etc., oder auch entsprechende Kombinationen dieser Materialien verwendet werden. Beispielsweise hat sich die Verwendung von Titan oder Zirkonium für gerade Meßrohre als besonders geeignet gezeigt, während, beispielsweise aus Gründen der Kostenersparnis für das Wandlergehäuse 100 wie auch den gegebenenfalls vorhandenen Gegenschwinger die Verwendung von Stahl durchaus von Vorteil ist.

Zum Erzeugen mechanischer Schwingungen des Meßrohrs 10 umfaßt der Meßwandler weiters eine an die Meßgerät-Elektronik elektrisch angeschlossene, beispielsweise elektrodynamische, Erregeranordnung mit einer - hier am Gegenschwinger 13 fixieren - und mit einem am Meßrohr 10 fixierten - hier nicht dargestellten - Permanentmagnet wechselwirkende Erregerspule 40. Die Erregeranordnung dient dazu, eine mittels der Betriebs- und Auswerteschaltung 20 inform eines entsprechend konditionierten elektrischen Treibersignals, z.B. mit einem geregelten Strom und/oder einer geregelten Spannung, eingespeiste elektrische Erregerenergie *E_{exc}* in eine auf das Meßrohr 10, z.B. pulsförmig, getaktet oder harmonisch, einwirkende und dieses in der vorbeschriebenen Weise elastisch verformende Erregerkraft *F_{exc}* umzuwandeln. Die Erregerkraft *F_{exc}* kann hierbei bidirektional oder aber auch unidirektional ausgebildet sein und in der dem Fachmann bekannten Weise z.B. mittels einer Strom- und/oder Spannungs-Regelschaltung, hinsichtlich ihrer Amplitude und, z.B. mittels einer Phasen-Regelschleife, hinsichtlich ihrer Frequenz eingestellt werden. Im besonderen ist die Erregranordnung, wie bei derartigen Meßwandlern durchaus üblich, ferner so ausgebildet und im Meßwandler angeordnet, daß sie im wesentlichen mittig an das Meßrohr angreift und/oder zumindest punktuell entlang einer gedachten mittigen Umfangslinie des Meßrohrs außen an diesem fixiert ist. Zum Detektieren von Schwingungen des Meßrohr 10 kann z.B. eine für derartige Meßwandler übliche Sensoranordnung verwendet werden, bei der in der dem Fachmann bekannten Weise mittels eines einlaßseitig am Meßrohr 10 plazierten - hier nicht dargestellten - Permanentmagneten und einer mit diesem wechselwirkenden - hier am Gegenschwinger 13 fixierten - ersten Sensorspule 50A und mittels eines auslaßseitig am Meßrohr 10 plazierten - hier nicht dargestellten - Permanentmagneten und einer mit diesem wechselwirkenden - hier ebenfalls am Gegenschwinger 13 fixierten - zweiten Sensorspule 50B die Bewegungen des Meßrohrs 10 erfaßt und in ein entsprechendes erstes bzw. zweites Sensorsignal s₁, s₂ umgewandelt werden.

Zum Anschließen der Erregeranordnung wie auch der Sensoranordnung an die erwähnte Betriebs- und Auswerteschaltung 20 des In-Line-Meßgeräts sind des weiteren entsprechende Anschlußleitungen vorgesehen, die zumindest abschnittsweise innerhalb des Wandlergehäuses geführt sind. Die Anschlußleitungen können dabei zumindest anteilig als elektrische, zumindest abschnittsweise in von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls lackierten Leiterplatte gebildet sein, vgl. hierzu auch die eingangs erwähnten US-B 67 11 958 oder US-A 53 49 872.

Wie bereits erwähnt, kann bei einem Meßgerät der in Rede stehenden Art gelegentlich das Problem auftreten, daß im Laufe des Betriebs zwischen Gehäuse und Meßgerät-Elektronik in unerwünschter Weise eine - in Fig. 2 und 3 jeweils durch einen Widerstand symbolisierte - elektrisch leitfähige Verbindung R_{F} gebildet wird, beispielsweise infolge von das Gehäuse befallendem Belag und/oder infolge von innerhalb des Gehäuses gebildetem Kondenswasser und/oder infolge von in das Gehäuse eindringenden Medium bei Leck geschlagenem Meßwandler und/oder undichtem Gehäuse, über die gegebenenfalls den Betrieb störende Leckströme fließen können. Der elektrische Widerstand einer solchen leitfähigen Verbindung kann dabei um mehr als eine Dekade kleiner als ein anfänglicher Isolationswiderstand zwischen Gehäuse und Meßgerät-Elektronik sein, insb. auch kleiner als 1MΩ. Infolgedessen können solche leitfähige Verbindungen, deren elektrischer Widerstand durchaus auch kleiner als 500 kΩ ausfallen kann, dazu führen, daß der anfänglicher isolationswiderstand zwischen Gehäuse und Meßgerät-Elektronik, der üblicherweise größer als 1MΩ, insb. größer als 10 MΩ, bemessen ist, signifikant abgesenkt wird, insb. auf erhebliche Leckströme ermöglichende Werte von kleiner 1MΩ.

Zum Zwecke des Überwachen des Meßgeräts auf die Bildung solcher, Leckströme begünstigender elektrisch leitfähiger Verbindungen R_{F} und/oder zum Zwecke des Erkennens eines mit einer solchen leitfähigen Verbindung einhergehenden fehlerhafter Betriebszustand des Meßgeräts ist ferner vorgesehen, im Betrieb mittels der Meßgerät-Elektronik gezielt zumindest zeitweise eine Potentialdifferenz ΔU₁₂ zwischen Gehäuse 100 und Meßgerät-Elektronik ME zu erzeugen, die einen definierten Leckstrom I_{L}, beispielsweise in einer Größenordnung von etwa 100 nA bis etwa 100 µA, sowohl durch die Meßgerät-Elektronik ME als auch im weiteren Verlauf durch eine solche, mit dieser Potentialdifferenz ΔU₁₂ koexistierende elektrisch leitfähige Verbindung R_{F} der vorgenannten Art treibt. Desweiteren wird der infolge der zumindest momentan zwischen Gehäuse 100 und Meßgerät-Elektronik ME bestehenden Potentialdifferenz ΔU₁₂ sowie der zumindest momentan bestehenden elektrisch leitfähige Verbindung R_{F} fließenden Leckstroms I_{L} mittels der Meßgerät-Elektronik entsprechend erfaßt, um basierend darauf wenigstens einen Zustandswert Z zu generieren, der den momentane - definitionsgemäß fehlerhaften oder zumindest unerwünschten - Betriebszustand des Meßgeräts momentan repräsentiert.

Die den Leckstrom treibende Potentialdifferenz ΔU₁₂ zwischen Gehäuse 100 und Meßgerät-Elektronik ME wird in einfacher Weise z.B. dadurch gebildet, daß das Gehäuse 100 auf einem ersten elektrischen Bezugspotential U₁, insb. einem Erdpotential, und wenigstens eine Komponente der Meßgerät-Elektronik ME, insb. der wenigstens eine Meßkanal 20A, zumindest zeitweise und/oder zumindest anteilig auf einem vom ersten elektrischen Bezugspotential U₁ verschiedenen zweiten elektrischen Bezugspotential U₂ gelegt sind, beispielsweise auf etwa 50% der von der internen Versorgungsschaltung 30 gelieferten Nutzspannung U_{N}.

Nach einer weiteren Ausgestaltung der Erfindung weist die Meßgerät-Elektronik ferner eine dem Erfassen von intern im Meßgerät fließenden elektrischen Strömen dienende, beispielsweise in die Auswerte- und Betriebsschaltung 20 integrierte und/oder im Betrieb zumindest zeitweise mit dem Mikrocomputer µC kommunizierende, Strommeßschaltung 20B auf, die zumindest zeitweise, insb. wiederkehrend, einen elektrischen Leckstrom I_{L} erfaßt, der infolge der zumindest zeitweise zwischen Gehäuse 100 und Meßgerät-Elektronik ME bestehenden Potentialdifferenz ΔU₁₂ sowie der gleichfalls zwischen Gehäuse 100 und Meßgerät-Elektronik ME bestehenden vorgenannten elektrisch leitfähigen Verbindung R_{F} durch selbige sowie auch innerhalb der Meßgerät-Elektronik ME selbst fließt. Nach einer weiteren Ausgestaltung der Erfindung umfaßt die Strommeßschaltung 20B dafür ferner einen dem Erfassen des von der Potentialdifferenz ΔU₁₂ getriebenen Leckstroms I_{L} dienenden Sensewiderstand R_{S}, der im Betrieb zumindest bei vorliegen einer elektrisch leitfähigen Verbindung zwischen Meßgerät-Elektronik ME und Gehäuse 100 vom gegebenenfalls in der vorbeschriebenen Weise provozierten Leckstrom I_{L} durchflossenen ist, so daß darüber eine dem Leckstrom I_{L} im wesentlichen proportionale Spannung, R_{S} · I_{L}, abfällt. Zwecks Übermittlung des erfaßten Leckstroms I_{L} an den gegebenenfalls vorhandenen Mikrocomputer µC umfaßt die Strommeßschaltung 20B gemäß einer weiteren Ausgestaltung der Erfindung wenigstens einen dem Digitalisieren des erfaßten Leckstroms I_{L} dienenden A/D-Wandler, der zumindest zeitweise an einem Ausgang ein den erfaßten Leckstrom I_{L} digital repräsentierende Digitalsignal liefert.

Zum Erzeugen der den elektrischen Leckstrom I_{L} treibenden Potentialdifferenz ΔU₁₂ umfaßt das Meßgerät ferner eine, insb. ebenfalls mittels der Versorgungsschaltung 30 bzw. mit der davon bereitgestellten internen Nutzspannung U_{N} betriebene, Quellenschaltung QS, die an einem Ausgang eine, beispielsweise zumindest zeitweise im wesentlichen konstante und/oder getaktete und/oder impulsförmige und/oder periodische, Ausgangsspannung liefert, Die Quellenschaltung QS kann dabei ferner so ausgebildet sein, daß deren Ausgangsspannung und insoweit auch das damit entsprechend eingestellte Bezugspotential U₂ der Meßgerät-Elektronik in Betrag und/oder Vorzeichen, beispielsweise sprunghaft und/oder stufenweise und/oder zyklisch, verändert werden kann und/oder, daß deren Ausgangsspannung eine Wechselspannung, insb. von veränderbarer Frequenz, ist. Die Steuerung der Quellenschaltung QS bzw. der davon bereitgestellten Ausgangsspannung kann beispielsweise mittels des gegebenenfalls in der Meßgerät-Elektronik ME vorgesehen Mikrocomputers µC erfolgen, der dementsprechend im Betrieb zumindest zeitweise mit der Quellenschaltung kommuniziert.

Wie in der Fig. 2 schematisch dargestellt, ist der Ausgang der Quellenschaltung QS - zumindest zwecks des Erzeugens der den Leckstrom I_{L} treibenden Potentialdifferenz ΔU₁₂ - im Betrieb zumindest zeitweise, beispielsweise mittels Schalter, mit dem Gehäuse elektrisch verbunden. Für den oben erwähnten Fall, daß das Gehäuse geerdet ist kann somit auch die Meßgerät-Elektronik zeitweise, insb. auch während des regulären Meßbetriebs, und/oder zumindest anteilig ebenfalls auf das erste elektrische Bezugspotential U₁ - hier also Erdpotential - gelegt werden.

Zumindest für den in Fig. 3 gezeigten Fall, daß die durch die Versorgungsschaltung 30 gelieferte interne Nutzspannung U_{N} uni-polar ausgebildet (V_{CC}) und infolgedessen, wie bei Meßwandlern vom Vibrationstyp durchaus üblich, zumindest die Auswerte- und Betriebsschaltung 20, insb. aber deren Meßkanal 20A, auch im normalen Meßbetrieb gleichzeitig auf voneinander verschiedenen Spannungsniveaus, beispielsweise sowohl mit einer internen Nutzspannung U_{N} = Vcc als auch mit 0,5 · U_{N} = 0,5 · Vcc, betrieben ist, kann der Ausgang der Quellenschaltung QS mit dem Gehäuse beispielsweise auch permanent elektrisch verbunden sein. Dementsprechend ist die Quellenschaltung QS gemäß einer weiteren Ausgestaltung der Erfindung ferner so ausgebildet, daß deren Ausgangsspannung und/oder die damit eingestellte Potentialdifferenz ΔU₁₂ zwischen Gehäuse und Meßgerät-Elektronik zumindest zeitweise im wesentlichen etwa 50% der internen Nutzspannung U_{N} beträgt. Alternativ oder in Ergänzung dazu ist, insb. für den Fall, daß das Meßgerät so auszulegen ist, daß es die Forderungen für Zündschutzart "Eigensicherheit" (Ex-i) erfüllt, ferner vorgesehen, die Quellenschaltung QS so zu dimensionieren, daß zumindest die damit eingestellte, dem Treiben des Leckstromes I_{L} dienende Potentialdifferenz ΔU₁₂ zwischen Gehäuse und Meßgerät-Elektronik stets kleiner als 40 Volt gehalten ist, insb. höchsten 32 Volt beträgt. In vorteilhafter Weise kann die Quellenschaltung QS dafür z.B. auch so ausgebildet sein, daß bereits deren dem Bilden der Potentialdifferenz ΔU₁₂ zwischen Gehäuse und Meßgerät-Elektronik dienende Ausgangsspannung maximal 40 Volt, insb. weniger als 32 Volt, beträgt.

Gemäß einer weiteren Ausgestaltung der Erfindung weist die Meßgerät-Elektronik, insb. für den erwähnten Fall, daß das Meßgerät so auszulegen ist, daß es die Forderungen für Zündschutzart "Eigensicherheit" (Ex-i) erfüllt, ferner eine, insb. strom- und/oder spannungsbegrenzend wirkende, Filterschaltung FS auf, die im Betrieb zumindest zeitweise oder auch dauerhaft sowohl an den Ausgang der Quellenschaltung QS als auch an das Gehäuse 100 elektrisch angeschlossen ist, gegebenenfalls auch unter Verwendung von elektronischen Schaltern. Die Filterschaltung FS kann beispielsweise mittels eines als Spannungsteiler und/oder als Strombegrenzer dienenden Widerstandsnetzes und/oder mittels einer als Spannungsgleichrichter und/oder als Spannungsbegrenzer dienenden Diodenschaltung gebildet sein. Das gegebenenfalls in der Meßgerät-Elektronik vorgesehene, als Spannungsteiler und/oder als Strombegrenzer für den Leckstrom dienendes Widerstandsnetz und/oder die gegebenenfalls in der Meßgerät-Elektronik vorgesehene, als Spannungsgleichrichter und/oder als Spannungsbegrenzer für die Ausgangsspannung der Quellenschaltung QS dienenden Diodenschaltung kann - wie in Fig. 2 oder 3 schematisch angedeutet - im Betrieb beispielsweise mittels Schalter an den Ausgang der Quellenschaltung QS und/oder an das Gehäuse 100 elektrisch angeschlossen werden, sei es nun dauerhaft oder aber auch nur vorübergehend.

Nach einer weiteren Ausgestaltung der Erfindung generiert die Meßgerät-Elektronik ME basierend auf dem von der Strommeßschaltung erfaßten Leckstrom I_{L}, beispielsweise mittels des gegebenenfalls in der Meß- und Betriebsschaltung 20 vorgesehene Mikrocomputers µC, wenigstens einen, insb. digitalen, Zustandswert Z, der einen Betriebszustand des Meßgeräts momentan repräsentiert. Zum Erkennen eines allfällig im Meßgerät vorliegenden Fehlers infolge einer leitfähigen Verbindung R_{F} zwischen Meßgerät-Elektronik ME und Gehäuse 100 und/oder zwecks Ermittlung des Zustandswerts Z weist die Meßgerät-Elektronik gemäß einer weiteren Ausgestaltung der Erfindung ferner wenigstens einen, gegebenenfalls auch mittels des via A/D-Wandler mit der Strommeßschaltung kommunizierenden Mikrocomputers µC realisierten, Komparator zum Vergleichen des erfaßten Leckstromes I_{L} mit wenigstens einem dafür vorgegebenen, beispielsweise auch seitens des Anwenders revidierbaren, Schwellenwert auf. Für den Fall, daß der Zustandswert Z einen mit dem Vorliegen einer leitfähigen Verbindung zwischen Meßgerät-Elektronik ME und Gehäuse 100 korrespondierenden fehlerhaften Betriebszustand repräsentiert, kann es zu dem von Vorteil sein, wenn die Meßgerät-Elektronik ME basierend auf dem von der Strommeßschaltung erfaßten Leckstrom I_{L} bzw. basierend auf dem Zustandswert Z einen, insb. unmittelbar vor Ort wahrnehmbaren, Alarm generiert, der das Auftreten eines, insb. durch unerwünschte Bildung leitfähiger Beläge (R_{F}) innerhalb des Gehäuses 100 verursachten, Fehler im Meßgerät signalisiert. Der Zustandswert Z kann dann dem Ansteuern des mit der Meßgerät-Elektronik ME zumindest momentan kommunizierenden Anzeigeelements AE dienen, beispielsweise übersetzt in eine entsprechende Klartext-Fehlermeldung, einen Fehlercode und/oder einen alarmierendes Farbwert für das Anzeigeelement AE, und/oder zum Erzeugen eines Schaltbefehls verwendet werden, der dem Eingreifen in den mittels des dann fehlerhaften Meßgeräts überwachten Prozeß dient. Alternativ oder in Ergänzung dazu kann der Zustandswert Z und/oder der davon abgeleitete Alarm auch an ein im Betrieb mit dem Meßgerät kommunizierendes übergeordnetes elektronisches Datenverarbeitungssystem, z.B. drahtlos per Funk und/oder leitungsgebunden, gesendet werden.

## Patentansprüche

1. Verfahren zum Überwachen eines, insb. als Meß- und/oder Schaltgerät der industriellen Meß- und Automatisierungstechnik ausgebildeten und/oder elektronischen, Meßgeräts, das einen zumindest teilweise in einem, insb. geerdeten und/oder metallischen, Gehäuse (100), nämlich in einem separaten Aufnehmer-Modul (100') des Gehäuses (100) untergebrachten Meßwandler (MW) sowie eine mit dem Meßwandler zumindest zeitweise verbundene, zumindest anteilig in einem separatem Elektronik-Modul (100") des Gehäuses (100) angeordnete Meßgerät-Elektronik (ME) aufweist, wobei der Meßwandler ein Meßwandler vom Vibrationstyp ist und wobei das Meßgerät als ein In-Line-Meßgerät ausgebildet ist, das mittels Flanschverbindungen in den Verlauf der Rohrleitung einfügbar ist, welches Verfahren folgende Schritte umfaßt:
- Erzeugen einer Potentialdifferenz (ΔU₁₂) zwischen Gehäuse und Meßgerät-Elektronik zum Bewirken eines Leckstromes (I_{L}), der sowohl durch die Meßgerät-Elektronik als auch durch eine mit dieser Potentialdifferenz koexistierenden, durch einen das Gehäuse befallenden Belag und/oder durch Kondenswasser gebildete unerwünschte elektrisch leitfähige Verbindung (R_{F}) zwischen Gehäuse und Meßgerät-Elektronik fließt,
- Erfassen des infolge der zumindest momentan zwischen Gehäuse und Meßgerät-Elektronik bestehenden Potentialdifferenz sowie der zumindest momentan bestehenden elektrisch leitfähige Verbindung (R_{F}) fließenden Leckstroms,
- Generieren wenigstens eines einen, insb. fehlerhaften, Betriebszustand des Meßgeräts momentan repräsentierenden, insb. digitalen, Zustandswertes (Z) unter Berücksichtigung des erfaßten Leckstroms,
- und Verwenden des wenigstens einen Zustandswerts zum Generieren eines Alarms, der das Auftreten eines durch unerwünschte Bildung leitfähiger Beläge innerhalb des Gehäuses verursachten Fehlers im Meßgerät signalisiert.

2. Verfahren nach dem vorherigen Anspruch, wobei die Potentialdifferenz zwischen Gehäuse und Meßgerät-Elektronik dadurch gebildet ist, daß das Gehäuse auf einem ersten elektrischen Bezugspotential (U1) und wenigstens eine Komponente der Meßgerät-Elektronik, insb. ein Meßkanal (20A) zum Erfassen von wenigstens einem mittels des Meßwandlers generierten Primärsignal (s₁), zumindest zeitweise auf einem vom ersten elektrischen Bezugspotential verschiedenen zweiten elektrischen Bezugspotential (U₂) liegen, insb. derart, daß das Gehäuse zum Bilden des ersten elektrischen Bezugspotentials geerdet ist und/oder daß die Meßgerät-Elektronik zeitweise ebenfalls auf dem ersten elektrischen Bezugspotential liegt.

3. Verfahren nach einem der vorherigen Ansprüche, weiters umfassend:
- einen Schritt des, insb. sprunghaften und/oder stufenweisen und/oder periodischen, Veränderns wenigstens eines Bezugspotentials der Meßgerät-Elektronik zum Erzeugen der Potentialdifferenz zwischen Gehäuse und Meßgerät-Elektronik; und/oder
- einen Schritt des galvanischen Verbindens eines Ausgangs einer innerhalb der Meßgerät-Elektronik vorgesehenen, eine, insb. zumindest zeitweise im wesentlichen konstante und/oder getaktete und/oder impulsförmige, Ausgangsspannung liefernde Quellenschaltung (QS) mit dem Gehäuse, insb. unter Zwischenschaltung einer strom- und/oder spannungsbegrenzend wirkenden Filterschaltung (FS), zum Bilden der Potentialdifferenz zwischen Gehäuse und Meßgerät-Elektronik; und/oder
- einen Schritt des Verwendens des wenigstens einen Zustandswerts zum Ansteuern eines mit der Meßgerät-Elektronik zumindest zeitweise, insb. momentan, kommunizierenden, insb. auch vom Meßgerät generierte Fehlermeldungen visualisierenden, Anzeigeelements (AE); und/oder
- einen Schritt des Vergleichens des wenigstens einen Zustandswerts mit wenigstens einem dafür vorgegebenen, insb. auch revidierbaren, Schwellenwert; und/oder
- einen Schritt des Erzeugens wenigstens eines Primärsignals (s₁) mittels des Meßwandlers, das mit wenigstens einer Meßgröße eines in einer, insb. elektrisch geerdeten, Rohrleitung und/oder einem, insb. elektrisch geerdeten, Behälter geführten Medium korrespondiert.

4. Verfahren nach einem der vorherigen Ansprüche,
- wobei die Meßgerät-Elektronik wenigstens einen mit einer Meßgerät internen Nutzspannung (U_{N}) betriebenen Meßkanal (20A) zum Erfassen von wenigstens einem mittels des Meßwandlers generierten Primärsignal (s₁) aufweist, und wobei die Potentialdifferenz zwischen Gehäuse und Meßgerät-Elektronik zumindest zeitweise auf 50% der internen Nutzspannung eingestellt ist; und/oder
- wobei die Potentialdifferenz zwischen Gehäuse und Meßgerät-Elektronik zum Treiben des Leckstromes auf 40 Volt oder weniger, insb. kleiner als 32 Volt, eingestellt ist.

5. Meßgerät zum Messen und/oder Überwachen wenigstens einer Meßgröße eines in einer Rohrleitung, insb. Coriolis-Massendurchflußmeßgerät, Dichte-Meßgerät, magnetisch-induktives Durchflußmeßgerät, Wirbel-Durchflußmeßgerät, Ultraschall-Durchflußmeßgerät, thermisches Massendurchfluß-Meßgerät, Druck-Meßgerät, Füllstand-Meßgerät, oder Temperatur-Meßgerät, welches Meßgerät umfaßt:
- ein, insb. geerdetes und/oder metallisches, Gehäuse (100) mit einem separaten Aufnehmer-Modul (100') und mit einem separaten Elektronik-Modul (100");
- einen zumindest teilweise im Aufnehmer-Modul (100') des Gehäuses (100), untergebrachten Meßwandler (MW) zum Erfassen der wenigstens einen Meßgröße sowie
- eine mit dem Meßwandler zumindest zeitweise elektrisch verbundene, zumindest anteilig im Elektronik-Modul (100") des Gehäuses (100) angeordnete Meßgerät-Elektronik (ME), die
-- wenigstens einen Meßkanal zum Erfassen und Weiterverarbeiten von wenigstens einem mittels des Meßwandlers generierten Primärsignal (s1), sowie
-- eine Strommeßschaltung (20B) zum Erfassen Meßgerät intern fließender elektrischer Ströme aufweist,
- wobei die Strommeßschaltung ausgestaltet ist, zumindest zeitweise, insb. wiederkehrend, einen elektrischen Leckstrom (I_{L}) zu erfassen, der infolge der zumindest zeitweise zwischen Gehäuse und Meßgerät-Elektronik bestehenden Potentialdifferenz (ΔU₁₂) sowie einer gleichfalls zwischen Gehäuse und Meßgerät-Elektronik bestehenden, durch einen das Gehäuse befallenden Belag gebildeten unerwünschten elektrisch leitfähigen Verbindung (R_{F}) fließt,
- wobei die Potentialdifferenz zwischen Gehäuse und Meßgerät-Elektronik dadurch gebildet ist, daß das Gehäuse auf ein erstes elektrisches Bezugspotential (U₁) und wenigstens eine Komponente der Meßgerät-Elektronik, insb. der Meßkanal, zumindest zeitweise auf ein vom ersten elektrischen Bezugspotential verschiedenes zweites elektrisches Bezugspotential (U₂) gelegt sind und/oder daß die Meßgerät-Elektronik (ME) zeitweise ebenfalls auf dem ersten elektrischen Bezugspotential (U₁) liegt;
- und wobei die Meßgerät-Elektronik ausgestaltet ist, basierend auf dem von der Strommeßschaltung erfaßten Leckstrom einen Alarm zu generieren, der das Auftreten eines durch unerwünschte Bildung leitfähiger Beläge innerhalb des Gehäuses verursachten Fehlers im Meßgerät signalisiert;
- wobei der Meßwandler ein Meßwandler vom Vibrationstyp ist,
- und wobei das Meßgerät als ein In-Line-Meßgerät ausgebildet ist, das mittels Flanschverbindungen in den Verlauf der Rohrleitung einfügbar ist.

6. Meßgerät nach dem vorherigen Anspruch, wobei das Gehäuse zum Bilden des ersten elektrischen Bezugspotentials (U₁) geerdet ist.

7. Meßgerät nach einem der Ansprüche 5 bis 6, weiters umfassend wenigstens eine an einem Ausgang eine, insb. zumindest zeitweise im wesentlichen konstante und/oder getaktete und/oder impulsförmige, Ausgangsspannung liefernde Quellenschaltung (QS).

8. Meßgerät nach dem vorherigen Anspruch,
- wobei der Ausgang der Quellenschaltung zum Erzeugen der zwischen Gehäuse und Meßgerät-Elektronik bestehenden Potentialdifferenz im Betrieb zumindest zeitweise, insb. dauerhaft, mit dem Gehäuse elektrisch verbunden ist; und/oder
- wobei die Quellenschaltung so ausgebildet ist, daß deren Ausgangsspannung, insb. sprunghaft und/oder stufenweise, veränderbar ist; und/oder
- wobei die Quellenschaltung so ausgebildet ist, daß deren Ausgangsspannung eine Wechselspannung, insb. von veränderbarer Frequenz, ist; und/oder
- wobei die Meßgerät-Elektronik ferner eine, insb. mittels eines als Spannungsteiler und/oder als Strombegrenzer dienenden Widerstandsnetzes und/oder mittels einer als Spannungsgleichrichter und/oder als Spannungsbegrenzer dienenden Diodenschaltung gebildete, Filterschaltung (FS) aufweist, die, insb. mittels Schalter, im Betrieb zumindest zeitweise, insb. dauerhaft, sowohl an den Ausgang der Quellenschaltung als auch an das Gehäuse elektrisch angeschlossen ist; und/oder
- wobei die Meßgerät-Elektronik ferner ein als Spannungsteiler und/oder als Strombegrenzer dienendes Widerstandsnetz aufweist, das, insb. mittels Schalter, im Betrieb zumindest zeitweise, insb. dauerhaft, sowohl an den Ausgang der Quellenschaltung als auch an das Gehäuse elektrisch angeschlossen ist; und/oder
- wobei die Meßgerät-Elektronik ferner eine als Spannungsgleichrichter und/oder als Spannungsbegrenzer dienenden Diodenschaltung aufweist, die, insb. mittels Schalter, im Betrieb zumindest zeitweise, insb. dauerhaft, sowohl an den Ausgang der Quellenschaltung als auch an das Gehäuse elektrisch angeschlossen ist.

9. Meßgerät nach einem der Ansprüche 7 bis 8,
- wobei der wenigstens eine Meßkanal mit einer Meßgerät internen, insb. auch dem Betreiben der Quellenschaltung dienenden, Nutzspannung (U_{N}) betrieben ist, und die Quellenschaltung so ausgebildet ist, daß deren Ausgangsspannung und/oder die Potentialdifferenz zwischen Gehäuse und Meßgerät-Elektronik zumindest zeitweise auf 50% der internen Nutzspannung eingestellt ist; und/oder
- wobei die Quellenschaltung so ausgebildet ist, daß deren dem Bilden der Potentialdifferenz zwischen Gehäuse und Meßgerät-Elektronik dienende Ausgangsspannung maximal 40 Volt, insb. weniger als 32 Volt, beträgt; und/oder
- wobei die Quellenschaltung so ausgebildet ist, daß die dem Treiben des Leckstromes dienende Potentialdifferenz zwischen Gehäuse und Meßgerät-Elektronik stets kleiner als 40 Volt gehalten ist, insb. höchstens 32 Volt beträgt.

10. Meßgerät nach einem der Ansprüche 5 bis 7,
- wobei die den Leckstrom ermöglichende elektrisch leitende Verbindung zwischen Gehäuse und Meßgerät-Elektronik einen elektrischen Widerstand aufweist, der, insb. um mehr als eine Dekade, kleiner als ein anfänglicher Isolationswiderstand zwischen Gehäuse und Meßgerät-Elektronik und/oder der kleiner als 1 MΩ, insb. kleiner als 500 kΩ, ist; und/oder
- wobei ein anfänglicher Isolationswiderstand zwischen Gehäuse und Meßgerät-Elektronik größer als 1MΩ, insb. größer als 10 MΩ, ist; und/oder
- wobei die Strommeßschaltung einen vom Leckstrom durchflossenen Sensewiderstand (Rs) umfaßt, über dem eine dem Leckstrom im wesentlichen proportionale Spannung abfällt; und/oder
- wobei die Meßgerät-Elektronik wenigstens einen Komparator zum Vergleichen des erfaßten Leckstromes mit wenigstens einem dafür vorgegebenen, insb. auch revidierbaren, Schwellenwert aufweist.

11. Meßgerät nach einem der Ansprüche 5 bis 10, weiters umfassend ein Anzeigeelement (AE) zum Visualisieren von Meßgerät intern generierten Fehlermeldungen, insb. eines basierend auf dem von der Strommeßschaltung erfaßten Leckstrom generierten Alarms.

12. Meßgerät nach einem der Ansprüche 5 bis 11, wobei die Meßgerät-Elektronik basierend auf dem von der Strommeßschaltung erfaßten Leckstrom wenigstens einen, insb. digitalen, Zustandswert (Z) generiert, der einen, insb. fehlerhaften, Betriebszustand des Meßgeräts momentan repräsentiert.

13. Meßgerät nach dem vorherigen Anspruch, wobei die Meßgerät-Elektronik basierend auf dem Zustandswert den Alarm generiert, der das Auftreten des durch unerwünschte Bildung leitfähiger Beläge innerhalb des Gehäuses verursachten Fehlers im Meßgerät signalisiert.

14. Meßgerät nach einem der Ansprüche 5 bis 13, wobei die Meßgerät-Elektronik weiters einen, insb. zumindest zeitweise mit der Strommeßschaltung und/der zumindest zeitweise mit der Quellenschaltung kommunizierenden, Mikrocomputer (µC), insb. auch wenigstens einen A/D-Wandler zum Digitalisieren des erfaßten Leckstroms aufweist, welcher A/D-Wandler zumindest zeitweise an einem Ausgang ein den erfaßten Leckstrom digital repräsentierende Digitalsignal liefert, aufweist.

15. Meßgerät nach Anspruch 12,
- wobei die Strommeßschaltung wenigstens einen A/D-Wandler zum Digitalisieren des erfaßten Leckstroms aufweist, und
- wobei die Meßgerät-Elektronik weiters einen zumindest zeitweise mit der Strommeßschaltung via A/D-Wandler kommunizierenden Mikrocomputer aufweist, der basierend auf dem von der Strommeßschaltung erfaßten und digitalisierten Leckstrom den wenigstens einen Zustandswert generiert.

## Claims

1. Method designed to monitor a measuring device, particularly designed as a measuring and/or switching device used in industrial measuring and automation technology and/or an electronic measuring device, said device having a transducer (MW) at least partially accommodated in a housing (100), particularly grounded and/or metal, specifically accommodated in a separate sensor module (100') of the housing (100), as well as a measuring device electronics unit (ME) that is at least temporarily connected to the transducer and is arranged at least in part in a separate electronic module (100") of the housing (100), wherein the transducer is a vibronic-type transducer and wherein the measuring device is designed as an in-line measuring device which can be inserted into the course of the pipe by means of flange connections, said method comprising the following steps:
- Generation of a potential difference (ΔU₁₂) between the housing and the measuring device electronics unit to bring about a leakage current (I_{L}) which flows both through the measuring device electronics unit and through an undesired electrically conductive connection (R_{F}) between the housing and the measuring device electronics unit that coexists with this potential difference and is formed by a deposit coating formed on the housing and/or by condensation water,
- Measurement of the leakage current flowing as a result of the potential difference existing at least currently between the housing and the measuring device electronics unit and the electrically conductive connection (R_{F}) existing at least at the moment,
- Generation at least of a status value (Z), particularly digital, currently representing an operational state, particularly a defective state, of the measuring device, taking into account the detected leakage current,
- And utilization of the at least one status value to generate an alarm that signals the occurrence of an error in the measuring device caused by the undesired formation of a conductive deposit coating inside the housing.

2. Method as claimed in the previous claim, wherein the potential difference between the housing and the measuring device electronics unit is formed by the fact that the housing lies on a first electrical reference potential (U₁) and at least a component of the measuring device electronics unit, particularly a measuring channel (20A) designed to measure at least a primary signal (s₁) generated using the transducer, lies at least temporarily on a second electrical reference potential (U2) which is different to the first electrical reference potential, particularly in such a way that the housing is grounded to form the first electrical reference potential and/or that the measuring device electronics unit is temporarily also on the first electrical reference potential.

3. Method as claimed in one of the previous claims, further comprising:
- a step, particularly a rapid and/or stepwise and/or periodic step, involving a change at least of a reference potential of the measuring device electronics unit to generate the potential difference between the housing and the measuring device electronics unit; and/or
- a step involving the galvanic connection, to the housing, of an output of a source circuit (QS) provided within the measuring device electronics unit, said source circuit delivering, particularly temporarily, an output voltage that is essentially constant and/or clocked and/or pulsed, particularly with the intermediate connection of a filter circuit (FS), which acts to limit the current and/or voltage, for the purpose of forming the potential difference between the housing and the measuring device electronics unit; and/or
- a step consisting of the use of the at least one status value to control a display element (AE) which communicates at least temporarily, particularly currently, with the measuring device electronics unit and, in particular, which also visualizes error messages generated by the measuring device; and/or
- a step involving the comparison of the at least one status value with at least a threshold value predefined to this effect, particularly a value which can also be revised; and/or
- a step involving the generation of at least a primary signal (s₁) by means of the transducer, which corresponds to at least a measured variable of a medium conducted in a pipe, particularly an electrically grounded pipe, and/or a vessel, particularly an electrically grounded vessel.

4. Method as claimed in one of the previous claims
- wherein the measuring device electronics unit comprises at least a measuring channel (20A) functioning with a internal useful voltage (U_{N}) of the measuring device to measure at least a primary signal (s₁) generated by the transducer, and wherein the potential difference between the housing and the measuring device electronics unit is regulated at least temporarily to 50 % of the internal useful voltage; and/or
- wherein the potential difference between the housing and the measuring device electronics unit for driving the leakage current is set to 40 volts or less, particularly less than 32 volts.

5. Measuring device designed to measure and/or monitor at least a measured variable of a measuring device, particularly a Coriolis mass flowmeter, a density meter, an electromagnetic flowmeter, a vortex flowmeter, an ultrasonic flowmeter, a thermal mass flowmeter, a pressure measuring device, a level measuring device or a temperature measuring device, in a pipe, said measuring device comprising:
- a housing (100), particularly grounded and/or metal, with a separate sensor module (100') and with a separate electronic module (100");
- a transducer (MW), accommodated at least partially in the sensor module (100') of the housing (100), said transducer being designed to measure the at least one measured variable, and
- a measuring device electronics unit (ME) which is electrically connected at least temporarily to the transducer and is arranged at least partially in the electronic module (100") of the housing (100), said electronics unit comprising
-- at least a channel to measure and further process at least a primary signal (s₁) generated by means of the transducer, as well as
-- a current measuring circuit (20B) designed to measure electrical currents flowing internally in the measuring device,
- wherein the current measuring circuit is designed to measure, at least temporarily, particularly recurrently, an electrical leakage current (I_{L}) which flows as a result of the potential difference (ΔU₁₂) existing at least temporarily between the housing and the measuring device electronics unit, as well as a result of an undesired electrically conductive connection (R_{F}) which also exists between the housing and the measuring device electronics unit and which is formed by a layer of deposit forming on the housing,
- wherein the potential difference between the housing and the measuring device electronics unit is formed due to the fact that the housing lies on a first electrical reference potential (U₁) and at least a component of the measuring device electronics unit, particularly the measuring channel, lies at least temporarily on a second electrical reference potential (U₂) which is different to the first electrical reference potential, and/or in that the measuring device electronics unit (ME) also temporarily lies on the first electrical reference potential (U₁);
- and wherein the measuring device electronics unit is designed to generate - on the basis of the leakage current detected by the current measuring circuit - an alarm that signals the occurrence of an error in the measuring device caused by the unwanted formation of conductive deposits on the inside of the housing;
- wherein the transducer is a vibronic-type transducer,
- and wherein the measuring device is designed as an inline measuring device which can be inserted in the course of the pipe by means of flange connections.

6. Measuring device as claimed in the previous claim, wherein the housing is grounded to form the first electrical reference potential (U₁).

7. Measuring device as claimed in one of the Claims 5 to 6, further comprising at least a source circuit (QS) supplying an output with an output voltage, particularly that is at least temporarily essentially constant and/or clocked and/or pulsed.

8. Measuring device as claimed in the previous claim,
- wherein the output of the source circuit designed to generate the potential difference existing between the housing and the measuring device is electrically connected to the housing at least temporarily, particularly permanently; and/or
- wherein the source circuit is designed in such a way that its output voltage can be modified, particularly rapidly and/or step-wise; and/or
- wherein the source circuit is designed in such a way that its output voltage is an alternating voltage, particularly of a variable frequency; and/or
- wherein the measuring device electronics unit further comprises a filter circuit (FS) which is formed, particularly by means of a resistor network acting as a voltage divider and/or current limiter and/or by means of a diode circuit acting as a voltage rectifier and/or voltage limiter, wherein said filter circuit is electrically connected during operation, particularly by means of a switch, at least temporarily, particularly permanently, both to the output of the source circuit and to the housing; and/or
- wherein the measuring device electronics unit further comprises a resistor network which acts as a voltage divider and/or a current limiter, wherein said resistor network is electrically connected during operation, particularly by means of a switch, at least temporarily, particularly permanently, both to the output of the source circuit and to the housing; and/or
- wherein the measuring device electronics unit further comprises a diode circuit acting as a voltage rectifier and/or voltage limiter, wherein said diode circuit is electrically connected, during operation, particularly by means of a switch, at least temporarily, particularly permanently, both to the output of the source circuit and to the housing.

9. Measuring device as claimed in one of the Claims 7 to 8,
- wherein the at least one measuring channel is operated with a useful voltage (U_{N}) which is internal to the measuring device, also particularly serving to operate the source circuit, and the source circuit is designed in such a way that its output voltage and/or the potential difference between the housing and the measuring device electronics unit is regulated at least temporarily to 50 % of the internal useful voltage; and/or
- wherein the source circuit is designed in such a way that its output voltage serving to form the potential difference between the housing and the measuring device electronics unit is 40 volts at maximum, particularly less than 32 volts; and/or
- wherein the source circuit is designed in such a way that the potential difference between the housing and the measuring device electronics unit, which serves to drive the leakage current, is always maintained at less than 40 volts, and particularly is 32 volts at maximum.

10. Measuring device as claimed in one of the Claims 5 to 7,
- wherein the electrically conductive connection between the housing and the measuring device electronics unit that permits the leakage current has an electrical resistance that is less than an initial insulating resistance between the housing and the measuring device electronics unit, particularly by more than a decade, and/or which is less than 1 MΩ, particularly less than 500 kΩ; and/or
- wherein an initial insulating resistance between the housing and the measuring device electronics unit is greater than 1 MΩ, particularly greater than 10 MΩ; and/or
- wherein the current measuring circuit comprises a sensing resistor (Rₛ) through which the leakage current flows, wherein a voltage that is essentially proportional to the leakage current drops over said resistor; and/or
- wherein the measuring device electronics unit has at least a comparator designed to compare the detected leakage current against at least a threshold value predefined to this effect, particularly a threshold value which can also be revised.

11. Measuring device as claimed in one of the Claims 5 to 10, further comprising a display element (AE) that is designed to visualize error messages that are generated in the measuring device, particularly an alarm generated on the basis of the leakage current detected by the current measuring circuit.

12. Measuring device as claimed in one of the Claims 5 to 11, wherein the measuring device electronics unit generates at least a status value (Z), particularly digital, based on the leakage current measured by the current measuring circuit, said status value currently representing an operational state, particularly a defective state, of the measuring device.

13. Measuring device as claimed in the previous claim, wherein the measuring device electronics unit generates the alarm on the basis of the status value, said alarm signaling the occurrence of the error in the measuring device caused by the undesired formation of conductive deposits inside the housing.

14. Measuring device as claimed in one of the Claims 5 to 13, wherein the measuring device electronics unit further comprises a microcomputer (µC), particularly communicating at least temporarily with the current measuring circuit and/or communicating at least temporarily with the source circuit, particularly also at least an A/D converter to digitize the leakage current recorded, said A/D converter at least temporarily supplying, to an output, a digital signal digitally representing the detected leakage current.

15. Measuring device as claimed in Claim 12,
- wherein the current measuring circuit comprises at least an A/D converter designed to digitize the detected leakage current, and
- wherein the measuring device electronics unit further comprises a microcomputer which communicates at least temporarily with the current measuring circuit via an A/D converter and which generates the at least one status value based on the leakage current detected by the current measuring circuit and digitized.

## Revendications

1. Procédé destiné à la surveillance d'un appareil de mesure, notamment sous la forme d'un appareil de mesure et/ou de commutation de la technique de mesure et d'automatisation industrielle et/ou d'un appareil de mesure électronique, lequel appareil comprend un transducteur (MW) logé au moins partiellement dans un boîtier (100), notamment mis à la terre et/ou métallique, à savoir dans un module de transmetteur (100') séparé du boîtier (100), ainsi qu'une électronique d'appareil de mesure (ME) qui est reliée au moins temporairement au transducteur et qui est disposée au moins partiellement dans un module électronique (100") séparé du boîtier (100), le transducteur étant un transducteur du type à vibrations et l'appareil de mesure étant conçu en tant qu'appareil de mesure en ligne pouvant être inséré dans le tracé de la conduite au moyen de raccords à bride, lequel procédé comprend les étapes suivantes :
- Génération d'une différence de potentiel (ΔU₁₂) entre le boîtier et l'électronique d'appareil de mesure pour provoquer un courant de fuite (I_{L}) qui circule à la fois à travers l'électronique d'appareil de mesure et à travers une liaison électriquement conductrice (R_{F}) indésirable entre le boîtier et l'électronique d'appareil de mesure, qui coexiste avec cette différence de potentiel et est formée par un dépôt s'accumulant sur le boîtier et/ou par de l'eau de condensation,
- Détection du courant de fuite circulant en raison de la différence de potentiel existant au moins momentanément entre le boîtier et l'électronique d'appareil de mesure et de la liaison électriquement conductrice (R_{F}) existant au moins momentanément,
- Génération au moins d'une valeur d'état (Z), notamment numérique, représentant momentanément un état de fonctionnement, notamment défectueux, de l'appareil de mesure, en tenant compte du courant de fuite détecté,
- et utilisation d'au moins une valeur d'état pour générer une alarme signalant l'apparition d'un défaut dans l'appareil de mesure causé par la formation indésirable de dépôts conducteurs à l'intérieur du boîtier.

2. Procédé selon la revendication précédente, pour lequel la différence de potentiel entre le boîtier et l'électronique d'appareil de mesure est formée par le fait que le boîtier est soumis à un premier potentiel de référence électrique (U₁) et au moins un composant de l'électronique d'appareil de mesure, notamment un canal de mesure (20A) destiné à mesurer au moins un signal primaire (s₁) généré au moyen du transducteur, est soumis au moins temporairement à un deuxième potentiel de référence électrique (U2) différent du premier potentiel de référence électrique, notamment de telle sorte que le boîtier est mis à la terre pour former le premier potentiel de référence électrique et/ou que l'électronique d'appareil de mesure est également soumise temporairement au premier potentiel de référence électrique.

3. Procédé selon l'une des revendications précédentes, comprenant en outre :
- une étape consistant à faire varier, notamment brusquement et/ou par paliers et/ou périodiquement, au moins un potentiel de référence de l'électronique d'appareil de mesure pour générer la différence de potentiel entre le boîtier et l'électronique d'appareil de mesure ; et/ou
- une étape consistant à relier galvaniquement au boîtier une sortie d'un circuit source (QS) prévu à l'intérieur de l'électronique d'appareil de mesure, lequel circuit source fournit, notamment temporairement, une tension de sortie pour l'essentiel constante et/ou cadencée et/ou pulsée, notamment avec interposition d'un circuit de filtrage (FS) qui agit en tant que limiteur de courant et/ou en tant que limiteur de tension, afin de former la différence de potentiel entre le boîtier et l'électronique d'appareil de mesure ; et/ou
- une étape consistant à utiliser l'au moins une valeur d'état pour commander un élément d'affichage (AE) qui communique au moins temporairement, notamment momentanément, avec l'électronique d'appareil de mesure et, en particulier, qui visualise également les messages d'erreur générés par l'appareil de mesure ; et/ou
- une étape consistant à comparer l'au moins une valeur d'état avec au moins une valeur seuil prédéfinie à cet effet, notamment également révisable ; et/ou
- une étape consistant à générer au moins un signal primaire (s₁) au moyen du transducteur, lequel signal correspond à au moins une grandeur de mesure d'un produit guidé dans une conduite, notamment mise à la terre électriquement, et/ou un réservoir, notamment mis à la terre électriquement.

4. Procédé selon l'une des revendications précédentes
- pour lequel l'électronique d'appareil de mesure comprend au moins un canal de mesure (20A) fonctionnant avec une tension utile interne (U_{N}) de l'appareil de mesure pour la mesure d'au moins un signal primaire (s₁) généré au moyen du transducteur, et pour lequel la différence de potentiel entre le boîtier et l'électronique d'appareil de mesure est réglée au moins temporairement à 50 % de la tension utile interne ; et/ou
- pour lequel la différence de potentiel entre le boîtier et l'électronique d'appareil de mesure pour le pilotage du courant de fuite est fixée à 40 volts ou moins, notamment est inférieure à 32 volts.

5. Appareil de mesure destiné à la mesure et/ou à la surveillance d'au moins une grandeur de process, notamment d'un débitmètre massique Coriolis, un densimètre, un débitmètre électromagnétique, un débitmètre vortex, un débitmètre à ultrasons, un débitmètre massique thermique, un appareil de mesure de pression, un transmetteur de niveau ou un transmetteur de température dans une conduite, lequel appareil de mesure comprend :
- un boîtier (100), notamment mis à la terre et/ou métallique, avec un module de transmetteur séparé (100') et avec un module électronique séparé (100") ;
- un transducteur (MW), logé au moins partiellement dans le module de transmetteur (100') du boîtier (100), lequel transducteur est destiné à mesurer l'au moins une grandeur de mesure, ainsi que
- une électronique d'appareil de mesure (ME) qui est reliée électriquement au moins temporairement au transducteur et est disposée au moins partiellement dans le module électronique (100") du boîtier (100), laquelle électronique comprend
-- au moins un canal pour la mesure et le traitement ultérieur d'au moins un signal primaire (s₁) généré au moyen du transducteur, ainsi que
-- un circuit de mesure de courant (20B) destiné à mesurer les courants électriques circulant à l'intérieur de l'appareil de mesure,
- le circuit de mesure de courant étant conçu pour mesurer, au moins temporairement, notamment de manière récurrente, un courant de fuite électrique (I_{L}) qui circule en raison de la différence de potentiel (ΔU₁₂) existant au moins temporairement entre le boîtier et l'électronique d'appareil de mesure, ainsi qu'en raison d'une liaison électriquement conductrice (R_{F}) indésirable qui existe également entre le boîtier et l'électronique d'appareil de mesure et qui est formée par un dépôt s'accumulant sur le boîtier,
- la différence de potentiel entre le boîtier et l'électronique d'appareil de mesure étant formée par le fait que le boîtier est soumis à un premier potentiel de référence électrique (U₁) et au moins un composant de l'électronique d'appareil de mesure, notamment le canal de mesure, est soumis au moins temporairement à un deuxième potentiel de référence électrique (U₂) qui est différent du premier potentiel de référence électrique, et/ou en ce que l'électronique d'appareil de mesure (ME) est également soumise temporairement au premier potentiel de référence électrique (U₁) ;
- et l'électronique d'appareil de mesure étant conçue, sur la base du courant de fuite détecté par le circuit de mesure de courant, pour générer une alarme qui signale l'apparition d'un défaut dans l'appareil de mesure causé par la formation indésirable de dépôts conducteurs à l'intérieur du boîtier ;
- le transducteur étant un transducteur du type à vibrations,
- et l'appareil de mesure étant conçu en tant qu'appareil de mesure en ligne pouvant être inséré dans le parcours de la conduite au moyen de raccords à bride.

6. Appareil de mesure selon la revendication précédente, pour lequel le boîtier est mis à la terre pour former le premier potentiel de référence électrique (U₁).

7. Appareil de mesure selon l'une des revendications 5 à 6, comprenant en outre au moins un circuit source (QS) fournissant, notamment au moins temporairement, à une sortie une tension de sortie pour l'essentiel constante et/ou cadencée et/ou pulsée.

8. Appareil de mesure selon la revendication précédente,
- pour lequel la sortie du circuit source destinée à générer la différence de potentiel existant entre le boîtier et l'appareil de mesure est au moins temporairement, notamment de manière permanente, reliée électriquement au boîtier ; et/ou
- pour lequel le circuit source est conçu de telle sorte que sa tension de sortie puisse être modifiée, notamment brusquement et/ou par paliers ; et/ou
- pour lequel le circuit source est conçu de telle sorte que sa tension de sortie est une tension alternative, notamment de fréquence variable ; et/ou
- pour lequel l'électronique d'appareil de mesure comprend en outre un circuit de filtrage (FS) qui est formé, notamment au moyen d'un réseau de résistances servant de diviseur de tension et/ou de limiteur de courant et/ou au moyen d'un circuit de diodes servant de redresseur de tension et/ou de limiteur de tension, lequel circuit de filtrage est relié électriquement, en fonctionnement, notamment au moyen d'un interrupteur, au moins temporairement, notamment de manière permanente, à la fois à la sortie du circuit source et au boîtier ; et/ou
- pour lequel l'électronique d'appareil de mesure comprend en outre un réseau de résistances qui sert de diviseur de tension et/ou de limiteur de courant, lequel réseau de résistances est relié électriquement, en fonctionnement, notamment au moyen d'un interrupteur, au moins temporairement, notamment de manière permanente, à la fois à la sortie du circuit source et au boîtier ; et/ou
- pour lequel l'électronique d'appareil de mesure comprend en outre un circuit de diodes servant de redresseur de tension et/ou de limiteur de tension, lequel circuit de diodes est relié électriquement, en fonctionnement, notamment au moyen d'un interrupteur, au moins temporairement, notamment de manière permanente, à la fois à la sortie du circuit source et au boîtier.

9. Appareil de mesure selon l'une des revendications 7 à 8,
- pour lequel l'au moins un canal de mesure est utilisé avec une tension utile (U_{N}) interne à l'appareil de mesure, servant notamment aussi à faire fonctionner le circuit source, et le circuit source étant conçu de telle manière que sa tension de sortie et/ou la différence de potentiel entre le boîtier et l'électronique d'appareil de mesure soit réglée au moins temporairement à 50 % de la tension utile interne ; et/ou
- pour lequel le circuit source est conçu de telle sorte que sa tension de sortie servant à former la différence de potentiel entre le boîtier et l'électronique d'appareil de mesure est au maximum de 40 volts, notamment inférieure à 32 volts ; et/ou
- pour lequel le circuit source est conçu de telle sorte que la différence de potentiel entre le boîtier et l'électronique d'appareil de mesure, qui sert à piloter le courant de fuite, est toujours maintenue inférieure à 40 volts, notamment est au maximum de 32 volts.

10. Appareil de mesure selon l'une des revendications 5 à 7,
- pour lequel la liaison électriquement conductrice entre le boîtier et l'électronique d'appareil de mesure, laquelle liaison permet le courant de fuite, présente une résistance électrique qui est inférieure à une résistance d'isolement initiale entre le boîtier et l'électronique d'appareil de mesure, notamment de plus d'une décade, et/ou qui est inférieure à 1 MΩ, notamment inférieure à 500 kΩ ; et/ou
- pour lequel une résistance d'isolement initiale entre le boîtier et l'électronique d'appareil de mesure est supérieure à 1 MΩ, notamment supérieure à 10 MΩ ; et/ou
- pour lequel le circuit de mesure de courant comprend une résistance de détection (Rₛ) parcourue par le courant de fuite, résistance aux bornes de laquelle une tension pour l'essentiel proportionnelle au courant de fuite chute ; et/ou
- pour lequel l'électronique d'appareil de mesure comporte au moins un comparateur destiné à comparer le courant de fuite détecté avec au moins une valeur seuil prédéfinie à cet effet, notamment révisable.

11. Appareil de mesure selon l'une des revendications 5 à 10, comprenant en outre un élément d'affichage (AE) destiné à visualiser les messages d'erreur générés à l'intérieur de l'appareil de mesure, notamment une alarme générée sur la base du courant de fuite détecté par le circuit de mesure de courant.

12. Appareil de mesure selon l'une des revendications 5 à 11, pour lequel l'électronique d'appareil de mesure génère au moins une valeur d'état (Z), notamment numérique, basée sur le courant de fuite détecté par le circuit de mesure de courant, laquelle valeur d'état représente momentanément un état de fonctionnement, notamment défectueux, de l'appareil de mesure.

13. Appareil de mesure selon la revendication précédente, pour lequel l'électronique d'appareil de mesure génère l'alarme sur la base de la valeur d'état, qui signale l'apparition du défaut dans l'appareil de mesure causé par la formation indésirable de dépôts conducteurs à l'intérieur du boîtier.

14. Appareil de mesure selon l'une des revendications 5 à 13, pour lequel l'électronique d'appareil de mesure comprend en outre un micro-ordinateur (µC), notamment également au moins un convertisseur A/N destiné à numériser le courant de fuite détecté, lequel micro-ordinateur communique au moins temporairement avec le circuit de mesure de courant et/ou au moins temporairement avec le circuit source, lequel convertisseur A/N fournit au moins temporairement à une sortie un signal numérique représentant numériquement le courant de fuite détecté.

15. Appareil de mesure selon la revendication 12,
- pour lequel le circuit de mesure de courant comprend au moins un convertisseur A/N destiné à numériser le courant de fuite détecté, et
- l'électronique d'appareil de mesure comprend en outre un micro-ordinateur qui communique au moins temporairement avec le circuit de mesure de courant via un convertisseur A/N et qui génère l'au moins une valeur d'état basée sur le courant de fuite détecté par le circuit de mesure de courant et numérisé par le convertisseur.
